# EUROPEAN PATENT APPLICATION

(11) **EP 1 679 646 A1**
(43) Date of publication of application: **12.07.2006**
(21) Application number: 05290029.7
(22) Date of filing: 06.01.2005
(51) Int. Cl.: G06Q 10/00, G06F 9/44

(54) **Method for operating a computer system providing user personal managing information data and related computer system**

(71) Applicant: ALCATEL, 75008 Paris (FR)
(72) Inventor: van Broeck, Sigurd, 2980 Zoersel (BE)
(74) Representative: Rausch, Gabriele

(57) **Abstract**

In a method for operating a computer system, in particular in a personal computer system (1), and a related computer system an operating system (320, 421, 422) is provided for running at least one application or service (340, 341, 342, 441, 442). Personal managing information (350, 351, 352) is generated and stored which gives information about the user's availability, the user's temporal management, and/or the user's spatial management on the computer system (1). The operating system (320, 421, 422) is adapted to receive the personal managing information (350, 351, 352), wherein the operating system (320, 421, 422) administrates the personal managing information (350, 351, 352) and makes it available to the at least one application or service (340, 341, 342, 441, 442), respectively, running on the operating system. According to the invention, the administration of personal managing information is not located on application level of a computer system, but is rather a part of the operating system.

## Description

### FIELD OF THE INVENTION

The present invention is directed to a method for operating a computer system, in particular in a personal computer system, providing user personal managing information data. The invention is further directed to a related computer system, in particular in a personal computer system, and to a related computer program product.

### BACKGROUND OF THE INVENTION

The use of personal information management software packages is widespread in the workplace. These so-called personal information managers typically run on personal computers and include electronic mail capability, an appointment calendar, and a contact list of frequent contacts. Personal information managers can greatly facilitate the organization of a person's interactions with other parties. Personal information management software allows the sending, receiving and sorting of e-mail messages, the planning of appointments, and the maintenance and organization of e.g. telephone numbers and e-mail addresses.

Usually, computer system users such as workers have a lot of personal managing information like contact lists, calendars, profiles, etc. scattered over various applications running on the computer system and over various devices, such as the computer system provided in the workplace, mobile computer systems, or PDA's.

In 2001, Microsoft announced a set of enabling services - codenamed "HailStorm", named ".NET MyServices" - that allowed the user to centralize his personal managing information and to make it accessible from everywhere at any time. The most recent operating system from Microsoft code-named Longhorn "build 4074" has a built-in address book or contact list that is accessible via the task bar. The address book (alias contact list) is now available as a part of the (Longhorn) operating system. Accordingly, the applications running on this operating system can make use of this single address book. Microsoft tried to persuade the user to organize his contact, calendar, location, presence, profile and other personal managing information in a central place. This initiative failed among others because the average user does not want to be bothered with this administration. With the new operating system from Microsoft, the user gets only a single address book for all his applications running on the same device or operating system, which diminishes the administrative overhead significantly.

It is an objective of the present invention to provide a method for operating a computer system providing user personal managing information data, and a related computer system which allow the user to synchronize widespread personal managing information data over all of the applications running on the computer system.

The objective is solved by a method for operating a computer system, in particular in a personal computer system, according to claim 1, and by a related computer system, in particular in a personal computer system, according to claim 9. Moreover, the invention is directed to a related computer program product according to claim 8.

### SUMMARY OF THE INVENTION

The method for operating a computer system according to the invention comprises the steps of providing an operating system, which provides a communication platform and an interface between hardware, software, and at least one user of the computer system, and providing at least one application or service running on the operating system. Moreover, the method comprises the step of generating and storing personal managing information which gives information about the user's availability, the user's temporal management, and/or the user's spatial management on the computer system. The operating system receives the personal managing information and administrates the personal managing information and makes it available to the at least one application or service, respectively, running on the operating system.

In the related computer system according to the invention, the operating system is adapted to run at least one application or service. The computer system comprises means for generating and storing personal managing information which gives information about the user's availability, the user's temporal management, and/or the user's spatial management on the computer system. The operating system is further adapted to receive the personal managing information, to administrate the personal managing information and to make it available from the storing means to the at least one application or service, respectively, running on the operating system. The personal managing information can be updated by the user. Moreover, the personal managing information administered by the operating system can be updated not only by the user but also autonomously by one or more (optionally preconfigured) service(s) or application(s) running on that computer system.

According to the invention, the administration of personal managing information is not located on application level of a computer system, but is rather a part of the operating system which provides a communication platform and an interface between hardware, software, and at least one user of the computer system. The main benefit of the invention is that not only personal managing information or social information like the address book or contact list is extracted from the application level to become part of the operating system. Rather, widespread personal managing information such as temporal, spatial, presence and other social information like respective calendars, location, availability and profile become part of the administration of the operating system of the computer system. Thus, the management of personal managing information does not represent a burden for the average user and may be reduced to a minimum. By providing support for all personal managing information, such as temporal, spatial and presence information, at the level of the operating system, all applications running on that operating system and making access to that personal managing information can be synchronized automatically. This removes part of the administrative burden for the user and additionally simplifies the applications making use of this built-in functionality. Moreover, application development for any application running on that operating system may be simplified.

The invention is preferably used within a personal computer system which is the typical working machine of a worker in a business environment. However, the invention is also applicable in connection with other computer systems, such as computing devices like STB's, PDA's, portables, mobiles, etc. With all such computer systems, any synchronization mechanism between different applications running on an operating system is made superfluous, independent of whether the synchronizations are performed manually by the user or automatically by the different applications. In this context, the invention can be implemented within a computer system running e.g. with a SQL-based file system, or any other storage mechanism. In addition, the implementation according to the invention may be made accessible via an API interface, which is often procedure- or object-oriented, or a (web) service interface, which is service-oriented. In all such implementations according to the invention, updates can be added seamlessly from any application running on an operating system according to the invention.

According to a preferred embodiment of the invention, the personal managing information is updated in the operating process of the computer system. Advantageously, all personal managing information is automatically updated when the user logs-on and/or logs-off in the operating system. Thus, the user may set his presence status at log-on time. While logged-on, the user can revert to the log-on screen to change his presence status. At log-off time, the user's presence status may be updated automatically. The user can thus use any application running on the operating system to e.g. communicate with another party, whereas his presence status and other personal managing information are managed by the operating system. Such presence status may include an availability status referring to the state in which the user resides. Examples of such state can be found in IM applications and are, e.g., "Away", "Extended away", "Do not disturb", etc. Such states may be announced by the user on top of the basic presence status, which indicates whether a user is either present or not.

According to a further preferred embodiment of the invention, the operating system is adapted to perform synchronization between multiple applications or services running on the operating system and which make access to the personal managing information of the computer system. This removes advantageously another part of the administrative burden for the user and, furthermore, simplifies applications that need not to be designed for synchronization among other applications.

According to another preferred embodiment of the invention, at least two operating systems are provided, wherein each of them is adapted to run at least one application or service. Each of the operating systems is further adapted to administrate the personal managing information and to make it available to at least one application or service. At least one of the operating systems is further adapted to synchronize with the respective other of the operating systems to align the personal managing information with all of the operating systems provided. Thus, the user working on a computer system running multiple operating systems e.g. in a time sequential manner, or working on different devices each having its own operating system is relieved from keeping personal managing information synchronized over different applications or services. In this concern, the concept of a single address book is already available on devices like e.g. the GSM.

Further advantageous features, aspects and details of the invention are evident from the dependent claims.

The invention will be better understood by reference to the following description of embodiments of the invention taken in conjunction with the accompanying drawings.

### BRIEF DESCRIPTION OF THE DRAWINGS

Fig: 1 illustrates a block diagram structure of an embodiment of a personal computer system,
Fig. 2 is a flow chart illustrating an embodiment of a sequence within an operating process of a computer system according to the invention,
Fig. 3 illustrates one structure of two applications running on one operating system, and
Fig. 4 illustrates another structure of multiple applications running on different operating systems of a computer system.

### DESCRIPTION OF THE PREFERRED EMBODIMENTS

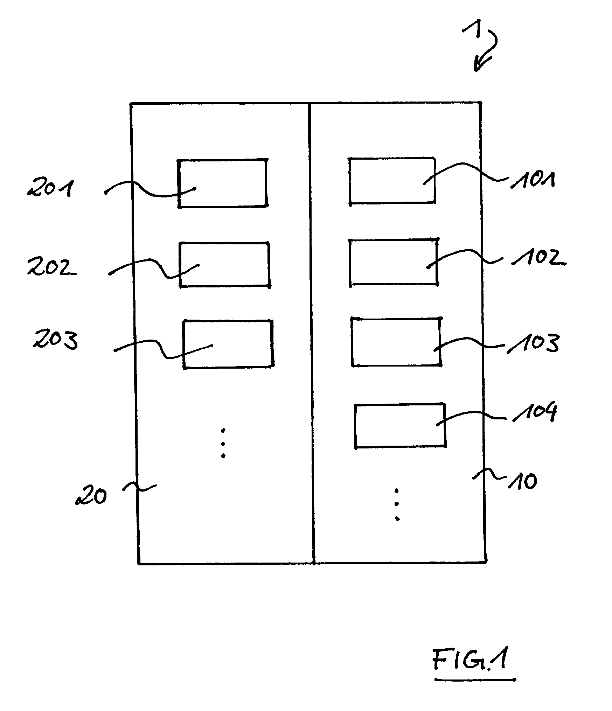

Figure 1 depicts a block diagram structure of an embodiment of a personal computer system as typically implemented in state of the art devices. A computer system 1 comprises interfacing circuits 20 and internal components 10. Interfacing circuits are defined by the components provided to interface between the internal components of the computer and the user or the external environment. Typical interfacing circuits include a display unit 201, a keyboard 202 for entering alphanumeric information by the external user, and a pointing device 203 represented by mouse, track ball or touch pad sensors. The internal components of the computer system 1 comprise an internal hard drive 101 provided for storing the operating system, application programs and data. A BIOS 103 is provided storing the instructions set to be run upon power up or resetting the computer. The core of the computer system 1 is a processor 104, which is called in a personal computer system as a CPU. When the power of the computer is turned on, the processor 104 fetches instructions from the BIOS 103 which sets up the primary configuration of the computer. Then, the computer is directed to initiate application programs stored inside the hard drive 101. The operating system stored in the hard drive 101 further sets up the hardware and software configurations of the computer and provides a communication platform and an interface between the hardware, software, and the external user of the computer system. After the operating system is booted, application programs stored inside the hard drive 101 can be launched and loaded into the RAM 102 to service the needs of the user.

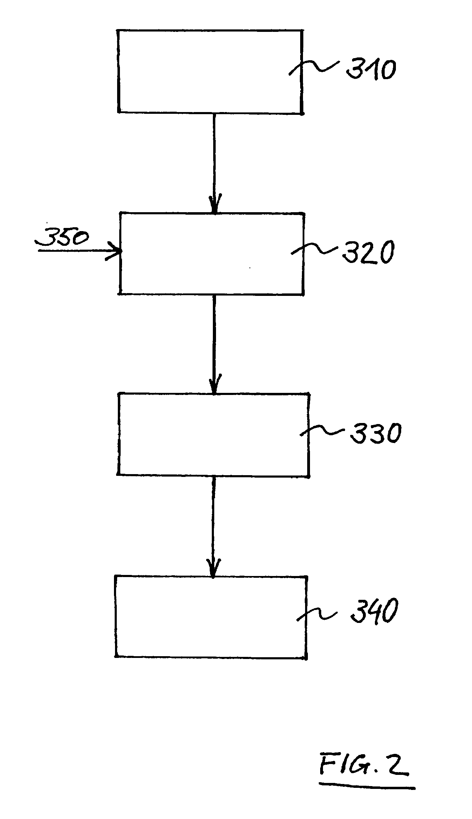

Figure 2 demonstrates the booting sequence and an operating process of a computer system according to the invention. Program instructions stored inside the BIOS memory 310 are executed by the processor when the power of the computer is turned on. Then, the computer starts to boot the operating system 320 which provides, in case of a Windows or Apple operating system, a desktop 330, which enables the user to access an application software 340 by clicking the shortcut icons displayed on the desktop screen.

Via the keyboard 202, and/or the pointing device 203, which are examples of multiple existent interface means, the user generates personal managing information 350 which gives information about the user's availability, the user's temporal management, and/or the user's spatial management on the computer system. An availability status refers to the state in which a user resides, as already outlined above. The temporal management information may include an appointment calendar for timely planning of appointments. The spatial management information may include information about the location where the user actually resides. Such information may also include information about the profile of the user.

The generated personal managing information 350 is stored, e.g., in the hard drive 101 and the RAM 102. The operating system 320 is adapted to receive the generated and stored personal managing information and to administrate the same. The operating system is further adapted to make the personal managing information available from the described storing means to the application 340 running on the operating system 320.

According to the invention, the administration of such personal managing information is not to be performed on application level, but is rather advantageously a part of the operating system, so that all applications running on that operating system can make use of that personal managing information and may be synchronized via the operating system automatically. This removes part of the administrative burden for the external user and additionally simplifies the applications which make use of this built-in functionality.

In addition to the application 340 according to Fig. 2, or alternatively, the operating system 320 may run a service such as a web service. Such service typically represents an independent module running on top of the operating system and provides a service (like an address book service) to other applications. A service is not part of the operating system and can have its own private or internal storage mechanism. A service is therefore more of central type than an application since it is typically used by one or more applications, but is less central than the operating system that is used for both applications and services.

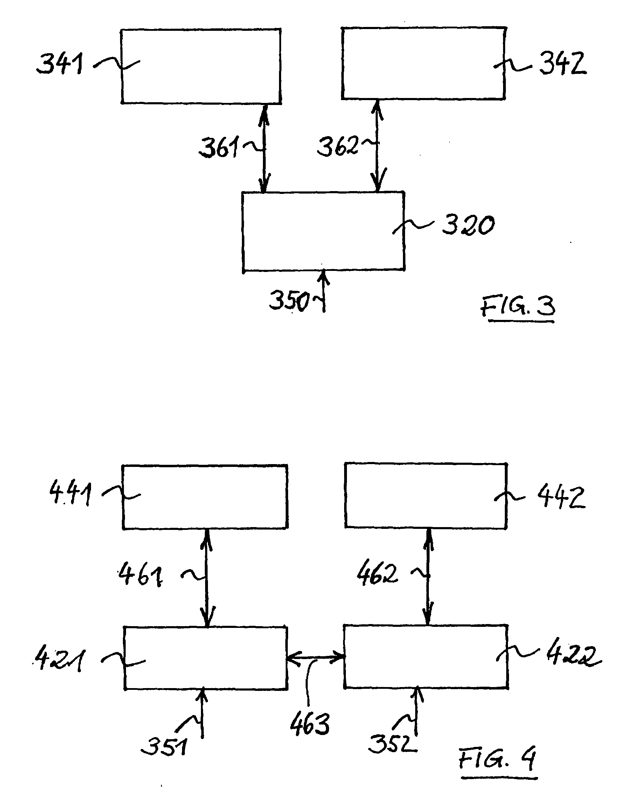

Figure 3 illustrates the structure of multiple application software running on one operating system of the computer system. The personal managing information 350 is provided, as described with reference to Fig. 2, to the operating system 320 which is adapted to run two applications 341 and 342, e.g., in a multitasking environment which is characterized by multiple applications running on one and the same system at the same time. Advantageously, both applications 341 and 342 running on the operating system 320 make use of the personal managing information 350 and are synchronized via the operating system 320 automatically concerning the personal managing information via the intercommunications 361 and 362.

Figure 4 illustrates another structure of multiple applications running on different operating systems. Each of the operating systems 421 and 422 is adapted to run at least one application 441 and 442, respectively. Furthermore, each of the operating systems 421, 422 is adapted to administrate the personal managing information 351, 352 provided to the operating systems in the same manner as outlined above with reference to Fig. 2. Each of the operating systems 421, 422 is adapted to make the received personal managing information available to the respective application 441, 442 via the intercommunications 461 and 462. At least one of the operating systems 421, 422 is further adapted to synchronize with the respective other of the operating systems via the intercommunication 463 to align the personal managing information 351 or 352 with all of the operating systems. The operating systems 421, 422 may be provided on multiple devices, or on one and the same device which is, e.g., switchable between the two operating systems when booting the computer system. According to the invention, the user is relieved from keeping applications synchronized which run on different operating systems.

According to a preferred embodiment of the invention, the personal managing information provided to one or more operating systems as described with reference to Figs. 2 to 4 is automatically updated when the user logs-on and/or logs-off in the operating system. Moreover, the user may set e.g. his availability status at log-on time. On a Windows machine where [ctrl] [alt] [del] gives opportunity to log-on, additional fields or icons could be displayed that could allow the user to set his availability status. While logged-on, the user can revert to the log-on screen to change his availability or presence status. On a Windows machine, [ctrl] [alt] [del] gives opportunity to change the user's availability or presence status. At log-off time, the user's availability status is updated automatically. The user can thus use any application to, e.g., "chat" with another person wherein his availability status is managed by the operating system.

## Claims

1. A method for operating a computer system, in particular in a personal computer system (1), providing user personal managing information data, comprising the steps of:
providing an operating system (320, 421, 422) providing a communication platform and an interface between hardware, software, and at least one user of the computer system,
providing at least one application or service (340, 341, 342, 441, 442) running on said operating system (320, 421, 422),
generating and storing personal managing information (350, 351, 352) which gives information about the user's availability, the user's temporal management, and/or the user's spatial management on the computer system (1),
the operating system (320, 421, 422) receiving said personal managing information (350, 351, 352),
wherein the operating system (320, 421, 422) administrates said personal managing information (350, 351, 352) and makes it available to said at least one application or service (340, 341, 342, 441, 442), respectively, running on said operating system.

2. The method according to claim 1, **CHARACTERIZED IN THAT**
said personal managing information (350, 351, 352) is updated in the operating process of said computer system (1).

3. The method according to claim 1, **CHARACTERIZED IN THAT**
said personal managing information (350, 351, 352) is automatically updated when said user logs-on and/or logs-off in said operating system (320, 421, 422).

4. The method according to claim 1, **CHARACTERIZED IN THAT** the step of generating said personal managing information (350, 351, 352) includes generating an availability status adapted to be updated by said user.

5. The method according to claim 1, **CHARACTERIZED BY** the further steps of:
providing at least two applications or services (341, 342) running on said operating system (320),
synchronizing the applications or services (341, 342) which make access to said personal managing information (350) of said computer system (1).

6. The method according to claim 1, **CHARACTERIZED BY** the further steps of:
providing at least two operating systems (421, 422) each providing a communication platform and an interface between hardware, software, and at least one user of the computer system (1),
providing at least one application or service (441, 442) running on one of said operating systems (421, 422),
wherein each of the operating systems (421, 422) is adapted to administrate said personal managing information (351, 352) and to make it available to said at least one application or service (441, 442), respectively,
at least one of said operating systems (421, 422) performing synchronization (463) with the respective other of the operating systems to align said personal managing information (351, 352) of said computer system (1) with all of said operating systems (421, 422).

7. The method according to claim 1, **CHARACTERIZED BY** the further steps of:
providing a taskbar by said operating system (320, 421, 422) for displaying any application or service (340, 341, 342, 441, 442) running on said operating system,
displaying said personal managing information (350, 351, 352) as one or more icons in said taskbar.

8. A computer program product directly loadable into the internal memory (102) of a digital computer system (1), comprising software code portions for performing the steps of claim 1 when said product is run on a computer system.

9. A computer system, in particular in a personal computer system (1), comprising:
an operating system (320, 421, 422) adapted to provide a communication platform and an interface between hardware, software, and at least one user of the computer system (1),
the operating system (320, 421, 422) further adapted to run at least one application or service (340, 341, 342, 441, 442),
means (202, 203, 101, 102) for generating and storing personal managing information (350, 351, 352) which gives information about the user's availability, the user's temporal management, and/or the user's spatial management on the computer system (1),
the operating system (320, 421, 422) further adapted to receive said personal managing information (350, 351, 352),
wherein the operating system (320, 421, 422) is adapted to administrate said personal managing information (350, 351, 352) and to make it available from said storing means (101, 102) to said at least one application or service (340, 341, 342, 441, 442), respectively, running on said operating system.

10. The computer system according to claim 9,
**CHARACTERIZED IN THAT**
the operating system (320) is further adapted to run at least two applications or services (341, 342),
the operating system (320) is further adapted to synchronize the applications or services (341, 342) which make access to said personal managing information (350).

11. The computer system according to claim 9, further
**CHARACTERIZED BY**
at least two operating systems (421, 422) each adapted to provide a communication platform and an interface between hardware, software, and at least one user of the computer system (1),
the operating systems (421, 422) further adapted to run at least one application or service (441, 442),
wherein each of said operating systems (421, 422) is adapted to administrate said personal managing information (351, 352) and to make it available to said at least one application or service (441, 442), respectively,
wherein at least one of said operating systems (421, 422) is further adapted to synchronize with the respective other of the operating systems to align said personal managing information (351, 352) with all of said operating systems (421,422).
